# EUROPEAN PATENT SPECIFICATION

(11) **EP 1 258 112 B1**
(45) Date of publication and mention of the grant of the patent: **12.04.2006**
(21) Application number: 02715662.9
(22) Date of filing: 29.01.2002
(51) Int. Cl.: H04L 12/28, H04L 12/64, H04N 7/24, G06F 1/24, G06F 13/42, H04L 29/14, H04L 29/12

(54) **RE-CONFIGURATION IN A DIGITAL NETWORK**
REKONFIGURATION IN EINEM DIGITALEN NETZWERK
RECONFIGURATION DANS UN RESEAU NUMERIQUE

(30) Priority: 14.02.2001 EP 01200630
(43) Date of publication of application: 20.11.2002
(73) Proprietor: Koninklijke Philips Electronics N.V., 5621 BA Eindhoven (NL)
(72) Inventor: VAN DE MEULENHOF, Dennis, NL-5656 AA Eindhoven (NL)
(74) Representative: Groenendaal, Antonius W. M.
(86) International application number: PCT/IB2002/000276
(87) International publication number: WO 2002/065706

(56) References cited:
- EP-A- 0 932 275

## Description

### BACKGROUND OF THE INVENTION

The invention relates to a method for executing a re-configuration in a self-configuring digital network after occurrence of a re-configuration trigger. A non-limiting example of such network is the Serial Bus Network IEEE 1394-1995 as discussed in International PCT Patent Application WO 00/23869. This standard allows a plug-and-play feature, and although originally intended for computer-based applications, has been introduced also into in-home consumer-electronic networks. Its prime definition level is the physical level. Various modifications and extensions to the standard have been implemented in Standards 1394A2000 and P1394.1. Still another feasible embodiment for the present invention is the USB bus standard.

The above standards have been combined with the **HAVI** or Home Audio/Video Interoperability principles that operate on a conceptual level. This allows to combine of controller devices or nodes with controlled devices or nodes. In such combination, the user-level audio and/or video data will travel as isochronous streams, whereas control signals will travel in an asynchronous manner.

Now, in such network, various incidents may cause such reconfiguration trigger signal, such as the adding or removing of a particular station, or a change of status in a particular station. However, other causes may also generate such trigger signal. The ***vehicle*** of the trigger signal may be a bus reset. In principle, all kinds of change may have occurred after such bus reset. The inventor has recognized that in general however, no change will have occurred at all. Such would then allow for executing a much simplified procedure. More in particular, the invention relates to a method as recited in the preamble of independent Claim 1 hereinafter.

In this respect, the abstract of the above PCT reference recites that the controlling application utilizes so-called ***handle*** objects to reconfigure objects to dynamically enumerate and represent devices that are coupled to a serial bus network after a bus reset event. During a self-identifying process, following the bus reset, information about the characteristics of the devices within the network will be received. From the self-identifying information, objects are generated that represent the various devices. Existing handle objects from a previous bus configuration are then compared to these newer objects. If a handle object would match such newer object, then a pointer value within the handle object will be changed to point to an address of the newer object. For devices that have been removed from the network, the handle object will preferably never be discarded, but is rather made invalid.

EP 0 932 275 describes a method and system for providing a device identification mechanism for a HAVi network communicating via an IEEE 1394 network. A global unique identifier (GUID) is associated with each device. A low level driver constructs a GUID list of each device on the HAVi network. The order of the GUID list matches the physical identifiers assigned to the devices on the 1394 bus. The GUID list is re-built on reset of the 1394 bus. Although the physical identifiers can change on bus reset, the GUID values are constant and are used for device communication. Translations between GUIDs and physical identifiers are performed when certain information is required.

Now, according to the present invention, upon occurrence of such re configuration trigger, the logical configuration of the network must be established again. In certain circumstances, this may require an inappropriately long time, inter alia, because certain stations may need to exchange a large amount of information with one or more other stations, and/or certain stations may feature a large inherent delay before they will be fully operational again. The inventor has recognized however, that one or more parts of the network could take up their respective operations again, even if certain other stations outside the part or parts in question were still busy with recuperating. In respect, the P1394.1 standard would even allow the forming of in-network clusters of node.

### SUMMARY TO THE INVENTION

In consequence, amongst other things, it is an object of the present invention to let those ones among the stations that lie in such part as recited resume their particular operations, if no obstacles against such operations would anymore exist, even if certain other stations outside the above part or parts in question were still busy with recuperating. Such inter alia would render the operation of the network much more stable, in that generally, pre-existing operational relationships between the nodes would be taken up again more or less immediately.

The method of the present invention is defined by Claim 1. Herein, the necessity implies all that is necessary for proceeding with the ongoing operations of the network, including of coping with possible contingencies. In this respect, the reference has indeed the transmitting of the device characteristics even to physical devices with which the transmitter station had not been cooperating. Waiting until completion thereof would clearly take an inappropriately long time.

The invention also relates to a system arranged for implementing a method according to the present invention as claimed in Claim 6, and to an apparatus being arranged to operate as a node station in such system and as claimed in Claim 7. Further advantageous aspects of the invention are recited in dependent Claims.

### BRIEF DESCRIPTION OF THE DRAWING

These and further aspects and advantages of the invention will be discussed more in detail hereinafter with reference to the disclosure of preferred embodiments, and in particular with reference to the appended Figures that show:
Figure 1, a logical node mapping of a network before an initial event;
Figure 2, a first logical node mapping of a network after an initial event;
Figure 3, a second logical node mapping of a network after an initial event;
Figure 4, a general binary tree network for use with the invention;
Figure 5, a flow chart of the operations executed according to a preferred embodiment.

### DETAILED DESCRIPTION OF PREFERRED EMBODIMENTS

A digital network such as, but not being limited to, a home network, will generally consist of a set of nodes interconnected by point-to-point physical links. The nodes may represent various user functionality devices, such as audio and/or video components, security cameras, household appliances, antenna disk or other external link stations, and also system-level devices, such as subaltern networks. In response to an initial event such as a bus reset, the network will be reconfigured and a new logical view of the overall status of the network must be created. For each respective node, this logical view or topology map will comprise the relevant node itself, its interconnections, and such additional functional or other information of the relevant nodes as would be appropriate. Other nodes will collect this additional information for each particular logic node as being based on the identifier of that particular node. After the reconfiguration, next to the local view, one or more of the nodes will store an overall logical view of the network. This overall view may be interrogated by other nodes according to need, until a next reconfiguration will occur. This new reconfiguration will then again cause the setting up of a new or amended overall logical view, which may then even be stored on a different node from before.

The above initial event will cause an unstable situation in the network. Such unstable situation may be aggravated because various nodes will need respective different amounts of time to recover from the unstable situation, included therein a time period that is necessary for the generating or receiving of the additional information, such as functional information, on a per node basis. This functional information may by way of example include various operational parameters or interface definitions. The heavy bus traffic necessary for effecting this communication may contribute to the system instability, because in principle, each node would need to have its own, possibly partial knowledge of the logical view of the overall network. Such acquiring of the overall view may in fact be executed in that a node would interrogate the node that stores the topology map. Another feasible stratagem were that each node would itself compose such logical map view. The latter procedure may result in unnecessary waste of bandwidth due to failed transactions requests to a node that is not yet ready for communicating, or in incomplete and/or inconsistent logical views at several nodes. There will in fact be no guarantee that all preliminary logical views will be identical.

The present invention applies selective topology, which allows the network to stabilize in a felicitous manner. Immediately after the event leading to the bus reset or trigger signal, the present invention will minimize the amount of communication. In fact, the inventor has recognized that it is generally not necessary to update all functionality information. The additional or functional information that uniquely identifies the physical node and its appropriate properties will always remain unchanged as long as the associated device remains in place, although its mapping on the logical identifier may be changed. It is thus proposed to only update the required information of the ***communicating*** nodes. Each node only has to store the additional information of the node or nodes it has a communcation relation with. After the initial event, the inventive idea is to take no actions on the network, but to only mark all available mappings as invalid. This marking will indicate that the stored information could still be up-to-date indeed, and that it might be re-used in the future. If the node in question has to communicate with another node marked ***invalid**,* for the first time after the initial event, the former will check whether the original mapping of the node on a particular device is still valid, through an information query to the corresponding node, and it will only selectively update the mapping according to necessity. If the mapping is invalid however, such as through removing or replacing of an apparatus, a network-wide query will be issued instead to update the mapping. The Selective Topology Mapping according to the present invention will allow the network to stabilize (it will delay the first network access), reduce the number of network accesses (use less bandwidth), and generally, increase overall efficiency.

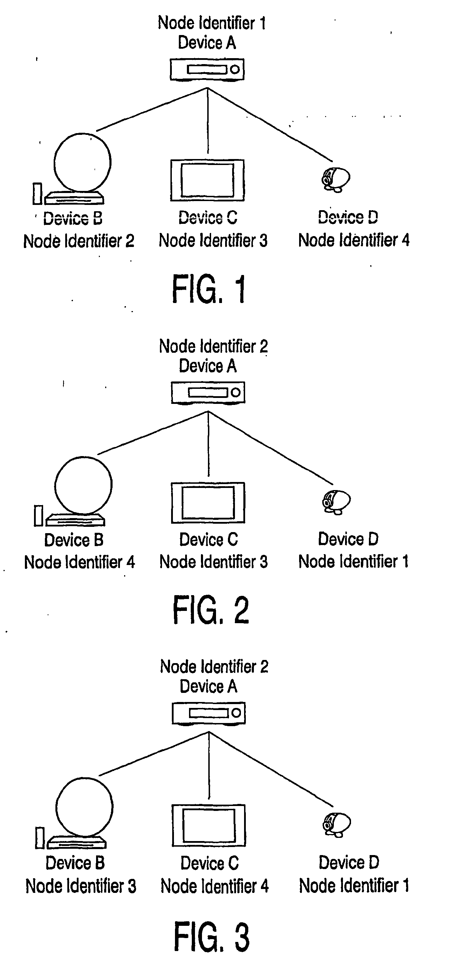

Figure 1 illustrates a logical node mapping of a network before an initial event. For demonstration purposes, only a small-size network has been shown, but all aspects thereof would upscale immediately to a larger network. In the embodiment, device A is a video storage apparatus, device B a disc antenna station, device C a television set, and device D a camera. Many other categories of devices would be feasible, as discussed earlier. The logical node identifiers have been indicated for each device or physical node. Device A, with node identifier #1 stores the overall logical view of the network. By way of example, Devices A and C are maintaining a video stream, for example, while running and displaying a video title. Accessing in the network is always based on the logical node identifier.

Furthermore, the arrangement embodiment carries the assumption that device D will need relatively much time for recovering from the initial event, and in such interval would not be available to supply information to any of the other devices. This means that with respect to this device D, the overall network topology will not be complete before the termination of the above recovery time. However, as far as only considering the maintaining of the above video stream, the overall network could become operational much faster, i.e., as soon as devices A and C will have checked that their respective mappings have been unchanged, or rather, found out enough details on their respective whereabouts and functionality. The same would apply to the replacing of one of the two devices, as far as this replacing would not influence the mode of operation. For example, another video storage apparatus would need the same cassette and would have to be controlled in the same manner as its predecessor.

Figure 2 illustrates a first logical node mapping of a network as amended after an initial event that were to generate the described trigger signal, but with the devices located as in Figure 1. As shown, device A has maintained its logical identifier, whereas all other devices or nodes have gotten different logical identifiers from the situation in Figure 1.

Figure 3 illustrates a second logical node mapping of a network after a similar initial event as in Figure 2, but for the remainder, unchanged. Again, various devices have gotten different identifiers.

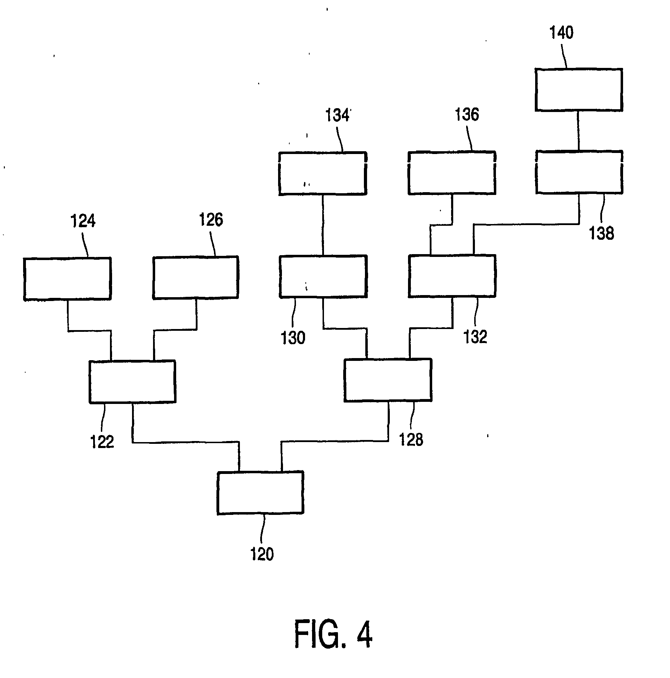

Figure 4 illustrates a general binary tree network for use with the invention; no configuration with loops will be considered. In the embodiment, root node 120 has a map of the logical network. As shown, other nodes 122 through 140 are interconnected in such manner that each node has zero, one or two connected nodes in a next higher network layer. Nodes 124, 126, 134, 136 and 140 are leaf nodes in that they connect no node at a higher layer level. In principle, higher numbers for the interconnection multiplicity are feasible. In practice, any network size could do. The same network may also be represented by rearranging the nodes into a different configuration, leaving the various connections unchanged.

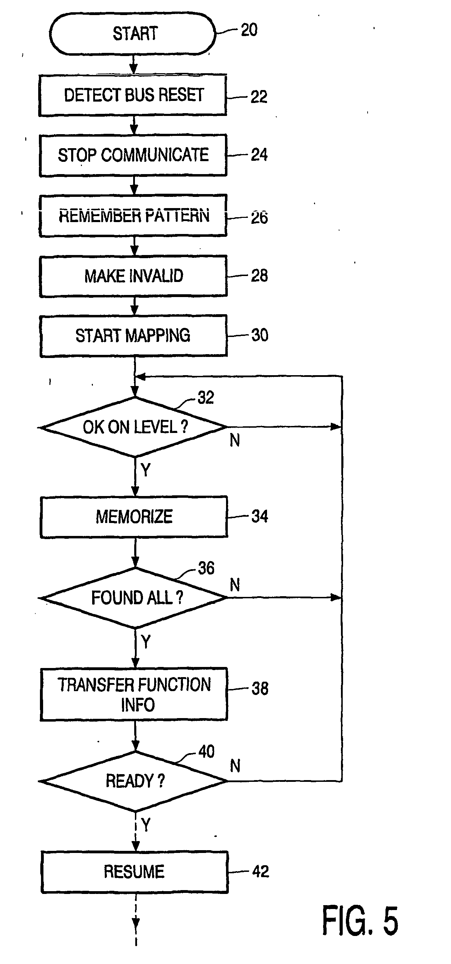

Figure 5 illustrates a flow chart of the operations executed according to an exemplary embodiment of the present invention. In block 20, the operation starts, and all necessary hardware and software facilities are assigned. In block 22, a Bus Reset signal is detected. Of course, such detecting may be effected through circling in a waiting loop, and this detecting would then represent a "detect-YES" exit of the loop. Now, in block 24, all ongoing communication operations are interrupted. In block 26, the pre-existing communication pattern is recognized by the node in question and saved in a local storage facility. This will include all ongoing communications as well as communication relations that for the moment had been inactive, but could become active if required. Next, in block 28 all mappings of the logical nodes on the physical nodes are made invalid. In block 30, the various nodes will start undertaking to effect a new mapping pattern that would be appropriate for the overall configuration. Such undertaking may be based on the node's self-identifier assigned under the 1394 standard, and be executed first on the tree level of node itself. A particular device would first try to monopolize the associated tree level through using a timer functionality and its self-identifier, and tentatively assign to itself a logical mapping number. This number will then be broadcast on that tree level, for consent by the other connected nodes or otherwise. In block 32, this consent (Y), or dissent (N) is detected. Next, in block 34, the mapping is stored. To this effect, the HAVI organization must find out all changes that have been effected and retrieve the associated information, by putting the appropriate questions to all devices concerned. This operation then proceeds for the other nodes on the tree level in question, which has not been explicitly shown, and also on the other tree levels. If the mapping is unrestorable, a network-wide query is undertaken for a replacement target node for such mapping.

In block 36, the device in question will detect wether all mappings for letting the device in question resume its communication pattern have succeeded. If not yet (N), the device reverts to block 32 to find such other mapping. For reference, in the mapping patterns of Figures 1-3, after a bus reset, two stations donot have to find any outside mapping at all, whereas the other two stations should each find only one external mapping before being able to resume operations. After completion of the local mapping (block 36 YES), the devices will transfer their functionality information to those other stations that need to know but have not yet gotten the information in question. In block 40, a READY? detection is executed. If not, the system reverts to block 32. Such case may for example be caused in that a subaltern mapping is still necessary. If ready, the operation of the network part is resumed. The formation of a global mapping pattern in one or more particular devices has not been illustrated in this Figure. Such storing may be undertaken in a root node that is specifically adapted, such as in Figures 1-3. Storing in more than one node could be useful as well. Note that various devices may already have reached the end of this flow chart, whereas other devices could still be lingering in blocks 32 or 38.

## Claims

1. A method for executing a re-configuration in a self-configuring digital network after occurrence of a reconfiguration trigger, through upon detecting such trigger (22), communicating between various physical node stations their respective logical node identifiers and furthermore communicating functionality information of said node stations,
said method being **characterized by** in a particular node station upon detecting such trigger:
recognizing (26) such other node stations that before such trigger had been conducting a communication relation with said particular node station forming a communication-related sub-set of node stations, storing for said sub-set of node stations said respective communicated functionality information and a respective mapping of a logical node on the physical node station, and marking (28) for the sub-set of node stations said respective mappings as invalid;
through said communicating of logical node identifiers establishing said reconfiguration; and
executing the communicating of said functionality information by checking whether the stored mapping of a logical node for a specific physical node station is still valid by sending an information query to said specific node station when for a first time after detecting such reconfiguration trigger said particular node station has to communicate to said specific node station.

2. A method as claimed in Claim 1, wherein such reconfiguration undertakes to re-establish said stored mapping.

3. A method as claimed in Claim 1, wherein upon detection of an invalid and unrestorable mapping, a network-wide query is undertaken for a replacement target node station for effecting such mapping.

4. A method as claimed in Claim 1, whilst in association with said reconfiguration storing an overall network topology for said sub-set of physical node stations of the network.

5. A method as claimed in Claim 1, wherein said network is based on IEEE 1394 or USB.

6. A system for executing a re-configuration in a self-configuring digital network after occurrence of a reconfiguration trigger; said system having reconfiguring means for executing a re-configuration in a self-configuring digital network after occurrence of a reconfiguration trigger, comprising detection means for detecting such trigger, communicating means for thereupon communicating between various physical node stations their respective logical node identifiers and furthermore communicating functionality information regarding the respective node stations, **characterized in that** a particular node station in said system includes recognizing means for, associated to such detecting, forming a communication-related sub-set of node stations by recognizing such other node stations that before such trigger had been conducting a communication relation with said particular node station, means for storing for said sub-set of node stations the respective communicated functionality information and a respective mapping of a logical node on the physical node station, marking means for marking for the sub-set of node stations said respective mappings as invalid, and said communicating means being operative for through said communicating of logical node identifiers establishing said reconfiguration, and for executing the communicating of said functionality information by checking whether the stored mapping of a logical node for a specific physical node station is still valid by sending an information query to said specific node station when for a first time after detecting such reconfiguration trigger said particular node station has to communicate to said specific node station.

7. An apparatus being arranged for operating as said particular node station in a system as claimed in Claim 6.

## Patentansprüche

1. Verfahren zum Ausführen einer Rekonfiguration in einem selbstkonfigurierenden digitalen Netzwerk nach Auftreten eines Rekonfigurationstriggers durch Kommunizieren ihrer jeweiligen logischen Knotenkennungen zwischen verschiedenen physikalischen Knotenstationen beim Erfassen eines derartigen Triggers (22) und weiterhin durch Kommunizieren von Funktionalitätsinformationen der Knotenstationen,
das Verfahren durch folgende Schritte in einer bestimmten Knotenstation beim Erfassen eines derartigen Triggers **gekennzeichnet**:
Erkennen (26) derartiger anderer Knotenstationen, welche einen auf die Kommunikation bezogenen Subsatz Knotenstationen bilden, bevor ein derartiger Trigger eine Kommunikationsbeziehung mit der bestimmten Knotenstation aufbaut, welche für den Subsatz Knotenstationen die jeweiligen kommunizierten Funktionalitätsinformationen und eine jeweilige Abbildung eines logischen Knotens auf der physikalischen Knotenstation speichern und welche für den Subsatz Knotenstationen die jeweiligen Abbildungen als ungültig markieren (28);
Einrichten der Rekonfiguration durch das Kommunizieren logischer Knotenkennungen; und
Ausführen des Kommunizierens der Funktionalitätsinformationen durch Prüfen, ob die gespeicherte Abbildung eines logischen Knotens für eine spezifische physikalische Knotenstation noch gültig ist, indem eine Informationsabfrage zu der spezifischen Knotenstation gesendet wird, wenn zum ersten Mal nach dem Erfassen eines derartigen Rekonfigurationstriggers die bestimmte Knotenstation mit der spezifischen Knotenstation kommunizieren muss.

2. Verfahren nach Anspruch 1, wobei eine derartige Rekonfiguration unternommen wird, um die gespeicherte Abbildung wiederherzustellen.

3. Verfahren nach Anspruch 1, wobei beim Erfassen einer ungültigen und nicht wiederherstellbaren Abbildung eine netzwerkweite Abfrage für eine Ersatzzielknotenstation zum Bewirken einer derartigen Abbildung unternommen wird.

4. Verfahren nach Anspruch 1, wobei im Zusammenhang mit der Rekonfiguration eine Gesamtnetzwerktopologie für den Subsatz physikalischer Knotenstationen des Netzwerks gespeichert wird.

5. Verfahren nach Anspruch 1, wobei das Netzwerk auf IEEE 1394 oder USB basiert.

6. System zum Ausführen einer Rekonfiguration in einem selbstkonfigurierenden digitalen Netzwerk nach Auftreten eines Rekonfigurationstriggers; wobei das System rekonfigurierende Mittel zum Ausführen einer Rekonfiguration in einem selbstkonfigurierenden digitalen Netzwerk nach Auftreten eines Rekonfigurationstriggers aufweist, welche ein Erfassungsmittel zum Erkennen eines derartigen Triggers, ein Kommunikationsmittel zum darauf folgenden Kommunizieren ihrer jeweiligen logischen Knotenkennungen zwischen verschiedenen physikalischen Knotenstationen und weiterhin zum Kommunizieren von Funktionalitätsinformationen, welche die jeweiligen Knotenstationen betreffen, umfassen, **dadurch gekennzeichnet, dass** eine bestimmte Knotenstation in dem System Erkennungsmittel zum einem derartigen Erfassen zugeordneten Bilden eines die Kommunikation betreffenden Subsatzes Knotenstationen durch ein Erkennen derartiger anderer Knotenstationen, welche vor einem derartigen Trigger eine Kommunikationsbeziehung mit der bestimmten Knotenstation aufgebaut hatten, Mittel zum Speichern der jeweils kommunizierten Funktionalitätsinformationen für den Subsatz Knotenstationen und einer jeweiligen Abbildung eines logischen Knotens auf der physikalischen Knotenstation, Markierungsmittel zum Markieren der jeweiligen Abbildungen für den Subsatz Knotenstationen als ungültig umfasst und wobei das Kommunikationsmittel durch das Kommunizieren logischer Knotenkennungen zum Einrichten der Rekonfiguration und zum Ausführen des Kommunizierens der Funktionalitätsinformationen durch Prüfen betriebsfähig ist, ob die gespeicherte Abbildung eines logischen Knotens für eine spezifische physikalische Knotenstation noch gültig ist, indem eine Informationsabfrage zu der spezifischen Knotenstation gesendet wird, wenn die bestimmte Knotenstation zum ersten Mal nach einem Erfassen eines derartigen Rekonfigurationstriggers mit der spezifischen Knotenstation kommunizieren muss.

7. Gerät, welches zum Betreiben als die bestimmte Knotenstation in einem System nach Anspruch 6 angeordnet ist.

## Revendications

1. Procédé permettant d'exécuter une reconfiguration dans un réseau numérique à configuration automatique après l'apparition d'une impulsion de déclenchement de reconfiguration en, lors de la détection d'une telle impulsion de déclenchement (22), communiquant entre diverses stations nodales physiques leurs identificateurs de noeuds logiques respectifs ainsi qu'en communiquant des informations de fonctionnalités desdites stations nodales;
ledit procédé étant **caractérisé par**, dans une station nodale particulière, lors de la détection d'une telle impulsion de déclenchement :
la reconnaissance (26) des autres stations nodales qui, avant une telle impulsion de déclenchement, communiquaient avec ladite station nodale particulière, formant un sous-ensemble en communication de stations nodales, le stockage pour ledit sous-ensemble de stations nodales desdites informations de fonctionnalités communiquées respectives et une correspondance respective d'un noeud logique sur la station nodale physique, et le marquage (28) pour le sous-ensemble de stations nodales desdites correspondances respectives comme étant non valides;
par ladite communication d'identificateurs de noeuds logiques, l'établissement de ladite reconfiguration, et
l'exécution de la communication desdites informations de fonctionnalités en vérifiant si la correspondance stockée d'un noeud logique pour une station nodale physique spécifique est encore valide en envoyant une demande d'informations à ladite station nodale spécifique lorsque, pour la première fois après la détection d'une telle impulsion de déclenchement de reconfiguration, ladite station nodale particulière doit communiquer avec ladite station nodale spécifique.

2. Procédé suivant la revendication 1, dans lequel une telle reconfiguration entreprend de ré-établir ladite correspondance stockée.

3. Procédé suivant la revendication 1, dans lequel, lors de la détection d'une correspondance non valide et non récupérable, une interrogation à l'échelle du réseau est entreprise pour trouver une autre station nodale cible permettant d'effectuer une telle correspondance.

4. Procédé suivant la revendication 1, permettant, en association avec ladite reconfiguration, de stocker une topologie de réseau globale pour ledit sous-ensemble de stations nodales physiques du réseau.

5. Procédé suivant la revendication 1, dans lequel ledit réseau est basé sur un bus IEEE 1394 ou USB.

6. Système permettant d'exécuter une reconfiguration dans un réseau numérique à configuration automatique après l'apparition d'une impulsion de déclenchement de reconfiguration, ledit système comprenant des moyens de reconfiguration pour effectuer une reconfiguration dans un réseau numérique à configuration automatique après l'apparition d'une impulsion de déclenchement de reconfiguration, comprenant des moyens de détection pour détecter une telle impulsion de déclenchement, des moyens de communication pour, à cet instant, communiquer entre diverses stations nodales physiques leurs identificateurs de noeuds logiques respectifs ainsi que pour communiquer des informations de fonctionnalités se rapportant aux stations nodales respectives, **caractérisé en ce qu'**une station nodale particulière dans ledit système comprend des moyens de reconnaissance pour, en association avec une telle détection, former un sous-ensemble en communication de stations nodales en reconnaissant d'autres stations nodales qui, avant une telle impulsion de déclenchement, communiquaient avec ladite station nodale particulière, des moyens pour stocker pour ledit sous-ensemble de stations nodales lesdites informations de fonctionnalités communiquées respectives et une correspondance respective d'un noeud logique sur la station nodale physique, des moyens de marquage pour marquer pour le sous-ensemble de stations nodales lesdites correspondances respectives comme étant non valides, et lesdits moyens de communication servant, par ladite communication d'identificateurs de noeuds logiques, à établir ladite reconfiguration, et à exécuter la communication desdites informations de fonctionnalités en vérifiant si la correspondance stockée d'un noeud logique pour une station nodale physique spécifique est encore valide en envoyant une demande d'informations à ladite station nodale spécifique lorsque, pour la première fois après la détection d'une telle impulsion de déclenchement de reconfiguration, ladite station nodale particulière doit communiquer avec ladite station nodale spécifique.

7. Appareil à même de fonctionner comme ladite station nodale particulière dans un système suivant la revendication 6.
